# FASCICULE DE BREVET EUROPEEN

(11) **EP 1 446 699 B1**
(45) Date de publication et mention de la délivrance du brevet: **15.08.2007**
(21) Numéro de dépôt: 02795385.0
(22) Date de dépôt: 19.11.2002
(51) Int. Cl.: G03B 42/02, G06F 19/00

(54) **PROCEDE D'OPTIMISATION ET EMBELLISSEMENT DES FILMS RADIOLOGIQUES PAR PROCESSUS CROISE DE TRAITEMENT PHOTOGRAPHIQUE DE L'IMAGE ET NUMERISATION**
OPTIMIERUNGSVERFAHREN UND VERSCHÖNERUNG VON RÖNTGENFILMEN DURCH KREUZVERFAHREN VON FOTOGRAFISCHER BEHANDLUNG DES BILDES UND DIGITALISIERUNG
METHOD FOR OPTIMIZING AND ENHANCING RADIOLOGICAL FILMS BY CROSS IMAGE PHOTOGRAPHIC PROCESSING AND DIGITIZATION

(30) Priorité: 19.11.2001 FR 0114927
(43) Date de publication de la demande: 18.08.2004
(73) Titulaire: Martinez, Alain, 31000 Toulouse (FR)
(72) Inventeur: Martinez, Alain, 31000 Toulouse (FR)
(86) Numéro de dépôt international: PCT/FR2002/003945
(87) Numéro de publication internationale: WO 2003/044599

(56) Documents cités:
- WO-A-00/31976
- DE-A- 4 203 447
- PATENT ABSTRACTS OF JAPAN vol. 2000, no. 19, 5 juin 2001 (2001-06-05) & JP 2001 052147 A (MITSUBISHI HEAVY IND LTD;NON-DESTRUCTIVE INSPECTION CO LTD), 23 février 2001 (2001-02-23)

## Description

L'invention concerne un procédé d'optimisation et d'embellissement du film radiologique par processus croisés de traitement de l'image de numérisation et de la mise en oeuvre d'un dispositif pour réaliser ce procédé.

À l'heure actuelle, les procédés d'embellissement des films radiologiques ne font appel qu'à la numérisation et il n'y a pas de traitement photographique spécifique de l'image.

Ce type de procédé est proposé dans les dispositifs décrits dans le brevet allemand n°4203447 au nom de DIGITAL DIAGNOSTIC, dans le brevet WO n°00/31976 de METAL & MEK. VERKSTAD AB et dans l'abrégé du brevet japonais n°2001-052147 de MITSUBISHI HEAVY IND LTD, NON-DESTRUCTIVE INSPECTION CO LTD). Un tel procédé consiste à digitaliser des images radiologiques analogiques :
- en plaçant le film sur un négatoscope,
- en photographiant ledit film radiologique à l'aide d'un appareil photographique numérique muni d'un objectif macro,
- et en transférant la prise de vue effectuée ci-dessus vers un ordinateur afin de la visualiser sur un écran et/ou de la stocker ,
ceci, après quelques traitements simples sur le contraste et la luminosité, à des fins de télétransmission et d'archivage des images ainsi numérisées. En dehors du stockage des images radiologiques, ces dispositifs se limitent à une numérisation, mais ne proposent pas une analyse séquentielle colorimétrique.

L'invention est basée sur un principe simple qui consiste à mettre en évidence des éléments peu ou mal visibles sur les radiographies standard.
Une image radiographique est améliorée de façon radicale par l'utilisation croisée :
- d'une prise de photographies par un appareil photo numérique muni d'un objectif macro ce qui permet d'obtenir, pour un même cliché radiographique sur un négatoscope, une multiplicité d'images dont la juxtaposition permet d'obtenir une image virtuelle du cliché présentant une définition égale à un multiple de la définition de l'appareil photo numérique.
- du traitement photographique par un ensemble de logiciels adaptés permettant d'effectuer des retouches sur l'écran d'ordinateur à fin d'en améliorer:

- la structure générale,
- les effets de relief,
- la reconnaissance topographique et la localisation d'une zone dont l'agrandissement, la pixelisation, les paramètres de structure, la saturation, les composantes colorimétriques, les caractéristiques de la lumière et du contraste peuvent être modifiées à volonté tout en conservant les caractéristiques propres de la structure étudiée et sans en altérer la nature.
   Le matériel utilisé comporte un dispositif selon la rev. 1.
   La méthode comporte plusieurs temps comme définit dans la rev. 10.

On a recours à l'utilisation du contraste automatique ou manuel,

L'utilisation du paramétrage des couleurs:
- soit dans les systèmes R.VB (rouge, vert, bleu)
- soit dans les niveaux de gris,
- soit dans le système CMJN (cyan, magenta, jaune, noir)
- soit dans le système Bitmap
- soit dans le système des couleurs indexées. De plus des mises au point sont effectuées dans le mode TSL (teinte, saturation, luminosité) ; et le recours à des filtres appropriés est mis en oeuvre. Chaque procédure est choisie afin de ne pas introduire d'artefacts. Les artefacts se définissant comme des images artificielles créées par l'opérateur. Par ailleurs, l'utilisation des procédés d'agrandissement et de rotation image, de pixelisation adaptées à l'agrandissement et à la taille initiale de l'image sont mises en oeuvre. L'utilisation d'histogrammes vient compléter la technique et il est également possible de transformer la radiographie en dessin.
- Dans un quatrième temps s'effectue le stockage des informations soit sur disque dur, soit de disquettes, soit sur CD-ROM, soit par l'impression sur papiers ordinaires
ou sur papiers photographiques selon le résultat recherché.

Il est bien évident que la stratégie de travail des images se fait en choisissant tout ou partie des paramètres proposés par les logiciels.

Les effets techniques du procédé agissent à la fois sur les radios standard : celles-ci voient leur qualité s'accroître de façon spectaculaire à la fois dans leur représentation spatiale, avec des effets de relief très proche, pour certaines d'entre elles, de l'anatomique réelle telle qu'elle apparaît en 3D. Certaines images osseuses peuvent être agrandies de façon importante sans altérer et leur définition et leur résolution grâce aux procédés déjà décrits plus haut. Cela permet l'étude minutieuse du moindre détail d'une zone suspecte profonde à l'instar du sacrum, difficile à analyser en radiologie standard.

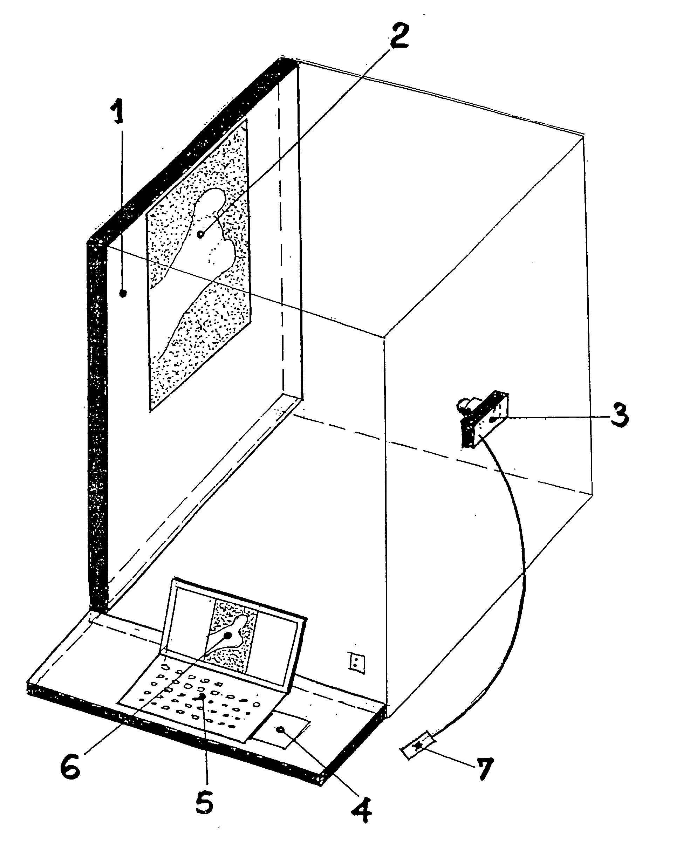

Par ailleurs des images de scanner peuvent être travaillées comme les radios standard et des travaux d'agrandissement adaptés isolent des segments difficilement visibles sur les clichés habituels transmis par le radiologue. Le praticien peut, comme le radiologue avant lui, se livrer à une analyse fine de ce qui lui paraît intéressant. Ainsi, l'étude de certaines parties molles dans les scanners (le muscle par exemple) peut être valorisée. Cela ouvre un champ de liberté passionnante et utile. Les images en résonance magnétique nucléaire peuvent aussi être étudiées et valorisées de la même façon. Des images radiologiques industrielles non médicales peuvent être travaillées de la même manière. Les résultats obtenus sur une centaine de radiographies standard et de films radiologiques de scanner, de résonance magnétique nucléaire et de mammographies sont remarquables et améliorent de façon spectaculaire la majorité des clichés. L'optimisation de l'image est le résultat de l'utilisation conjointe des procédures de contraste, l'agrandissement, de focalisation, de modification colorimétrique, une pixelisation adaptées. Le praticien doit être compétent et formé à ces techniques pour ne pas créer d'artefacts. Cette technique et ce procédé permettent d'éviter certaines erreurs de diagnostic quand la structure anatomie est particulièrement complexe ou qu'il se trouve confronté une pathologie trompeuse ou fruste. Des radiographies anciennes peuvent être retravaillées et gagner en qualité car il est possible d'en obtenir une amélioration et dans le contraste et dans la restitution des détails. Ainsi le procédé accroît de façon majeure l'efficacité du praticien en charge d'interpréter lui-même des radiographies qu'il a prescrites et qui engage sa responsabilité, qu'il soit médecin spécialiste ou généraliste, examinant, en deuxième main les documents radiographiques, transmis par le radiologue. Cette deuxième lecture par le médecin prescripteur est profitable aux patients et, de même, le radiologue peut en bénéficier lui-même lors de l'élaboration des clichés. Cela permettrait de diminuer l'irradiation des patients en évitant les clichés successifs inutiles. Naturellement c'est une affaire de cas particuliers et ce procédé ne prétend, en aucune façon, se substituer à la scopie jugée nécessaire par le praticien. D'autre part le praticien libéral ou hospitalier, le chercheur, tous, peuvent utiliser des images en fonction de leurs recherches et stocker ces informations sur disquettes, CD-ROM, ou sur le disque dur ou en imprimant les images sur papier ordinaire ou photographique. Le praticien qui, in fine, connaîtra les corrélations entre les images radiologiques, l'intervention chirurgicale éventuelle, les données anatomo-pathologies, les effets de la thérapeutique, pourra se constituer une banque de données utile à la collectivité en multipliant les résultats et en évitant des effets de biais de recrutements trop spécialisés. D'autre part l'apport de données radiologiques ainsi magnifiées peuvent aider les hôpitaux dans les pays les plus pauvres et sous-développés qui ne peuvent assumer le coût d'imagerie onéreuse. D'autre part le praticien peut rapidement, via Internet, envoyer des images à un confrère étranger plus spécialisé. Quant aux applications techniques et industrielles, un mode d'exécution de l'invention sera décrit ci-après, à titre d'exemple non limitatif, avec référence au dessin annexé dans le quel la figure est une vue en perspective schématique d'une installation pour la mise en oeuvre du procédé selon l'invention :
- la référence 1 désigne le négatoscope dont l'intensité lumineuse peut varier soit par l'action par d'un rhéostat soit par la nature optique de la source lumineuse.
- la référence 2 désigne le film radiographique à photographier installé sur le négatoscope.
- de la référence 3 montre l'appareil photo numérique qui se déplace selon la direction de la flèche pour l'adaptation de la distance focale. Il est muni d'une télécommande (7)
- la référence 5 désigne l'ordinateur et ses logiciels (4) auquel est raccordé l'appareil photo numérique muni d'un dispositif macro.
- la référence 6 désigne l'écran où apparaît l'image.
- une enceinte optique clôt l'ensemble du dispositif
- une chambre noire ou une pièce éclairée uniquement par la lumière du négatoscope peut également être utilisée.

En ce qui concerne la technique de traitement des images radiologiques, le mode macro est utilisé par l'appareil photo numérique. Pour un même cliché radiographique disposé sur un négatoscope une multiplicité de photos numériques de très haute définition sont effectuées dont la juxtaposition permet d'obtenir une image du cliché présentant une définition égale à un multiple de la définition de l'appareil de photographie. Des moyens peuvent être prévus pour déplacer l'appareil de photos en regard du négatoscope de manière à obtenir cette multiplicité de photographies numériques.

En ce concerne les modalités de la prise de photographies, elles sont effectuées dans une pièce obscure ou dans une chambre noire, l'unique éclairage provenant de la lumière du négatoscope. Ce négatoscope est soit en position verticale, accroché à un mur ou horizontal posé sur la surface plane. Les incidences utilisées sont perpendiculaires au plan du négatoscope c'est à dire frontales. Ce sont les incidences obligatoires. Il est possible d'ajouter, si l'on souhaite obtenir un effet simulant le 3D, des incidences obliques et latérales, de proche en proche autour d'un axe de 180 degrés. La persistance rétinienne permettant le lien neurophysiologique entre les différents clichés et permet à l'opérateur de construire mentalement de façon facile la structure spatiale.

Le flash est évidemment inhibé afin de ne pas créer de zone éclair sur la photographie. L'image étant acquise sur l'ordinateur, le traitement de cette image radiologique peut débuter. En ce qui concerne l'évaluation de la qualité de l'image effectuée par l'examinateur on peut dire qu'elle est opérateur dépendante et d'excellente quand elle est effectuée par un médecin entraîné et formé à un diagnostic qualitatif de l'image, naturellement s'agit d'un point de vue subjectif mais efficace, en fonction de sa compétence.

L'intérêt d'utiliser un histogramme de l'image est qu'il permet une étude objective de la qualité de cette dernière : un diagramme fourni par le logiciel étudie la répartition harmonieuse ou pas des zones claires et sombres. L'histogramme présente donc sous la forme de graphique le nombre de pixels pour un niveau de luminosité donnée. L'absence de détail dans une image peut être la conséquence d'une numérisation ou d'une photographie de mauvaise qualité. Il fournit également un aperçu de la plage tonale de l'image. On peut ainsi objectiver qu'une image a une dominante trop foncée ou trop claire. Cela permet de déterminer les corrections tonales nécessaires. L'axe horizontal de l'histogramme représente des valeurs colorimétriques des pixels les plus sombres (0) aux plus clairs (255) et sont portés sur l'axe vertical le nombre de pixels ayant cette valeur. Quant à l'outil pipette il permet de connaître par déplacement du pointeur les valeurs colorimétriques de l'image. Il est possible également de connaître précisément le nombre de pixels par unité de mesure choisie: nous utilisons les pixels par pouce et par conséquent nous connaissons objectivement la taille exacte de l'image numérisée.

En ce qui concerne le choix du système colorimétrique plusieurs possibilités peuvent être utilisées.

Le choix du système RVB offre des caractéristiques suivantes : une image en mode RVB se compose des trois couleurs primaires, rouge (R), vert (V) et bleu (B. Ce mode est qualifié d'additif car les couleurs s'additionnent pour en créer une nouvelle. Ces couleurs sont caractérisées par une valeur comprise entre 0 et 255. Ainsi un rouge pur aura pour valeur : 255 rouges, 0 bleu, 0 vert. Le jaune comporte : rouge 255, vert 255, bleu 0. Une absence de ces trois couleurs primaires se traduit par du noir et lorsque les trois valeurs sont à leur maximum la couleur affichée est blanche. La méthode TSL est caractérisée par les paramètres suivants: la teinte, la saturation, la luminosité. Ces trois composantes sont-elles aussi comprises entre 0 et 255. La roue chromatique fonctionne comme une horloge affichant de 256 heures (255 plus le 0) qui fonctionne à l'envers. En haut se trouve le rouge à 0. En se déplaçant dans le sens inverse des aiguilles, le jaune est à 43, le vert à 85, le cyan à 128 directement opposé au rouge, le bleu à 170 directement opposé au jaune, le magenta de 212 directement opposé au vert. La luminosité et la quantité d'intensité de la lumière perçue: une valeur de ses roues correspond à l'obscurité totale et une valeur de 255 au blanc pur. La saturation se définit comme la pureté ou la proportion de teinte dans la couleur. En résumé la teinte est l'attribut principal localisant la couleur sur le spectre, la saturation son degré de pureté et la luminosité l'aspect clair ou foncé de la couleur.

Quant au système niveau de gris, les couleurs d'une image sont supprimées et remplacées par un niveau de gris correspondant à son niveau de luminosité. Quand il s'agit d'une image en 8 bits celle-ci contient de 256 niveaux de gris.

En ce qui concerne le système Bitmap celui-ci se définit comme un mode colorimétrique dans le quel l'image est constituée exclusivement de pixels noirs et blancs.

En ce qui concerne le système CMJN (cyan, magenta, jaune, noir) il représente un mode colorimétrique destiné aux images à imprimer en quadrichromie et il est basé sur une synthèse soustractive des couleurs : l'encre du papier absorbe une partie de la lumière blanche qui l'éclaire et réfléchit l'autre.

En ce qui concerne le système des couleurs indexées il s'agit d'un mode colorimétrique fondé sur une table réunissant uniquement les couleurs essentielles d'une image (256 au maximum). Les autres couleurs sont simulées
ou remplacées par la plus proche dans la table.

En ce qui concerne le réglage de l'affichage du moniteur, le nombre de bits par pixel ou résolution de pixel détermine combien d'informations couleur sont affichées à chaque pixel du fichier. Plus cette valeur est élevée que le nombre de couleurs est important et ces dernières sont représentées avec précision dans le cas de l'image numérisée. Ainsi un pixel comportant un bit est blanc ou noir. Si la résolution est de 8 le nombre de valeurs possibles est de 256 couleurs enfin un pixel comportant 24 bits présentent 16 millions de couleurs possibles. En général échantillonnage est compris entre 1 et 48 bits par pixel. Le problème d'une image aux 16 bits par couche est que cette image est très volumineuse. Des conversions sont possibles d'un mode à l'autre.

Afin d'optimiser l'interprétation des photos numériques on a recours à l'utilisation de la technique des calques. Les calques peuvent se définir comme une sorte de couches individuelle dans une image. Ils peuvent aussi être comparés à une pile de feuilles transparentes dont chacune relate les transformations que l'image a subies. Cela permet d'avoir accès à chaque transformation en cliquant dessus. On peut également supprimer ce qui est inutile ou de qui n'apporte pas les renseignements escomptés. Le défilement de ces différents calques où est mémorisé chaque transformation de l'image est désigné par un historique. Ces différents calques sont indépendants les uns des autres sauf si l'opérateur désire créer des liens entre eux. L'image de fond ou image initiale est sauvegardée dans tous les cas. Naturellement chaque calque peut être, à volonté, édité, retouché, dupliqué, sauvegardé indépendamment des autres. Ainsi donc l'image initiale peut être multipliée à volonté avec des modifications différant tant en ce qui concerne la couleur, le contraste et toute autre transformation. L'ensemble des modifications d'une image à travers le système de calques est appelé Script et peut être mémorisée, cette propriété est très importante.

En pratique nous choisissons de dupliquer l'image initiale dans les deux systèmes : deux calques sont attribués au système RVB comportant l'image initiale ainsi que son négatif, deux calques sont attribués au système niveau de gris comportant, elle aussi, un négatif. Ensuite chaque image va être travaillée par un ajustement des niveaux : Cette commande permet de redéfinir les tons clairs, moyens et foncés d'une image. Elle permet un plus grand contrôle en corrigeant précisément chaque gamme de tons. Une amélioration des contrastes être obtenue, en utilisant des courbes de niveaux qui servent à régler la plage tonale d'une image en fonction d'une zone cible, en utilisant une visualisation des différentes variantes colorimétriques, en se servant des balances des couleurs qui, permettent une correction globale des composantes colorimétriques. On peut faire varier la teinte et la saturation de l'image, renforcer la netteté de l'image en utilisant des filtres d'accentuation, utiliser les courbes de transfert de dégradé et en utilisant la technique de transformation de la radiographie en dessin.

En ce qui concerne le choix de la taille des images, le redimensionnement de l'image sur l'écran est basée sur le principe qu'une image perd moins de détail lorsque sa taille réduite que lorsqu'elle est augmentée. Il faut bien savoir que modifier le nombre de pixels peut générer dans certaines conditions du flou à l'écran. En ce qui concerne l'impression la problématique n'est pas identique car plus la résolution de l'image est élevée meilleure sera la qualité d'impression dans la limite des possibilités de l'imprimante. À titre d'exemple une taille d'images à 300 pixels par pouce donne une excellente impression.

Il faut également envisager le cas particulier des images vectorielles : les images radiologiques peuvent être importées dans un logiciel de traitement vectoriel. La différence de nature avec l'image pixelisée est que l'image vectorielle se compose de droites et de courbes vectorisées définies mathématiquement et géométriquement. L'image vectorielle se comporte comme un objet dans son intégralité et sa caractéristique et de ne pas être altérée par le déplacement, le redimensionnement, et la modification colorimétrique. Cette stabilité l'assimile à un objet défini d'après sa forme et sa taille. Certains images seront notablement améliorées par ce système.

En ce qui concerne les autres possibilités de traitement d'images, il est possible, en fonction des besoins, d'utiliser d'autres procédés comme l'utilisation de la sélection caractérisée par le fait qu'une partie de l'image peut être traitée de façon indépendante en la sélectionnant à l'aide des outils rectangles de sélection, ellipse de sélection qui isole du reste de l'image la zone que l'on désire étudier. In situ peuvent être modifiés la lumière, le contraste, les paramètres colorimétriques. Cela permet à l'oeil de se concentrer sur la zone intéressée. Cette image peut être laissée dans l'image initiale où elle apparaît en sur brillance ou elle peut être détachée par la commande recadrer, et, replacée sur un nouveau calque.

On peut aussi utiliser le déplacement d'une partie de l'image pour dégager par exemple un interligne articulaire ou pour isoler et traiter des parties molles d'une radiographie ostéo-articulaire il est possible de déplacer l'image sélectionnée sur le même calque ou sur un nouveau calque. Cela donne d'excellents résultats sur les clichés radiologiques peu dosés pour évaluer les parties molles.

Quant à l'utilisation des filtres il s'agit de différents filtres fournis par les logiciels : il y a ceux qui accentuent les contours, ceux qui augmentent la netteté de l'image et ceux qui contribuent à donner du volume à l'image. Tous ces filtres doivent être utilisés par des médecins compétents, formés à cette technique, afin de ne pas créer d'artefacts lors de la valorisation de l'image radiographique. En ce qui concerne les possibilités d'automation elles résolvent de façon satisfaisante l'impression péjorative que l'on peut avoir de ces procédures qui sont longues à décrire et à expliquer et partant qui peuvent paraître trop complexes et trop longues en pratique courante. En réalité il est possible et facile d'améliorer la rapidité du système en utilisant la technique dite du Script. Le script représente l'ensemble des modifications d'une image enregistrée dans chaque calque indépendamment et mémorisé de façon séquentielle. Il suffit d'enregistrer le script et ses informations, de lui donner un nom de code et en cliquant sur le nom du script on voit se dérouler toutes les transformations, comme les mises au point automatique sur les contrastes et les niveaux, on voit se dérouler en quelques secondes toutes les opérations que l'on désire intégrer dans ce schème automatique. Cela constitue à l'évidence un gain de temps considérable réalisé avec facilité.

En ce qui concerne l'affichage des règles, il est possible d'afficher des unités de mesure : en pixel, en pouce, en cm, ces repères peuvent être utiles pour comparer des lésions lors d'examens successifs. Un quadrillage peut apparaître sur l'image qui facilite le repérage. Les règles n'apparaissent pas à l'impression. En ce qui concerne le stockage des données les supports utilisés seront soit le disque dur soit les CD-ROM. Quant aux formats il s'en fonction des logiciels utilisés pour l'acquisition de l'image ou pour la nécessité de les utiliser sur Internet. Les formats JPEG, Gif sont classiques.

En ce qui concerne l'outil texte il permet d'annoter les images radiographiques et d'y transcrire par symbole des opérations effectuées sur l'image à fin que la communauté médicale et scientifique sache quelles transformations ont subi ces images radiographiques. De même peuvent y figurer les informations souhaitables le nom du patient et la date. Le compte-rendu peut être mémorisé dans l'ordinateur du médecin ou sur un CD-ROM. Quant aux résultats et à l'intérêt du procédé on peut constater que les images obtenues par cette technique sont remarquables en raison de la qualité de la très haute définition obtenue par le mode macro de l'appareil photo numérique, du travail effectué sur les caractéristiques optiques des images comme les paramètres de couleur, de contraste, de pixelisation ainsi que l'isolement des parties molles, et la transformation en dessin de même que la vectorisation des images radiologiques. D'autre part l'image va être analysée de façon extrêmement fine et dans tous ses détails structurels ou topographiques. L'efficacité diagnostique s'en trouve accrue non seulement lors de la lecture à l'écran mais également au négatoscope : c'est un fait que nous avons observé empiriquement, nous avons demandé à des confrères de lire une radiographie sans le secours de notre procédé et ensuite de revoir les mêmes radiographies : ils purent constater, que pour les détails qui leur avaient échappé, les uns étaient certes peu ou pas visibles mais d'autres leur apparaissaient évident alors qu'en première lecture ils avaient échappé à leur attention. C'est optimisation de la lecture des clichés radiologiques analogiques est également valable pour la lecture des scanners et des IRM. Il convient toutefois de préciser que ce procédé n'entend, en aucune façon, se substituer à une I.R.M ou à un scanner mais peut valoriser cet examen et permettre aux praticiens qui les ont prescrits et qui les reçoivent des radiologues de rechercher certains détails qui les intéressent.

Il s'agit d'un outil remarquable pour la recherche, le dépistage précoce, l'enseignement de la médecine. Qu'il s'agisse d'une recherche personnelle du médecin ou qu'il s'agisse de la recherche institutionnelle. La transformation des radiographies en dessin peut servir à des fins éducatives, on peut imaginer, qu'en calibrant les paramètres les composantes on puisse se servir de ce support pour reproduire en animations et mouvements physiologiques et étudier la cinétique articulaire. Par ailleurs est évident que l'on obtient des images simulant les 3D et ceux-là elle peut être utile pour les représentations cinétiques et statiques. Par ailleurs ce n'est pas le moindre avantage la qualité des renseignements fournis permettent d'éviter des redondances radiologiques et limiter les incidences inutiles et par-là même l'irradiation du patient.

Enfin ce procédé améliore non seulement les clichés des radiographies standard mais également les clichés issus d'appareils radiographiques avec numérisation incorporée.

## Revendications

1. Dispositif pour l'optimisation et l'embellissement des films radiologiques pour mettre en évidence de éléments peu ou mal visibles sur les radiographies standard; comprenant
un négatoscope (1) sur lequel est placé le film radiologique (2),
un appareil photographique numérique (3) muni d'un objectif macro permettant un traitement d'images sur écran (6), **caractérisé en ce qu'**il comprend une enceinte optique close constituant une pièce obscure ou une chambre noir, dans laquelle l'unique éclairage provient de la lumière du négatoscope.

2. Dispositif selon la revendication 1, ou l'appareil photographique est muni d'une télécommande (7).

3. Dispositif selon la revendication 1 ou 2, comprenant en plus un ordinateur (5) muni de logiciels adaptés intégré soit dans l'enceinte optique soit situé en dehors de ladite enceinte optique close.

4. Dispositif selon une des revendications précédentes comportant des moyens d'affichage des mesures de tout ou partie des structures radiologiques étudiées et permettant des études chiffrées des éléments utiles et permettant une étude comparative dans le temps.

5. Dispositif selon une des revendications précédentes dans laquelle le négatoscope est soit en position verticale, accroché à un mur de l'enceinte optique soit en position horizontal posé sur une surface plane de l'enceinte optique.

6. Dispositif selon une des revendications précédentes ou obtenir un effet simulant le 3D, des incidences obliques et latérales, de proche en proche autour d'un axe de 180 degrés sont utilisés.

7. Dispositif selon une des revendications précédentes comprenant l'affichage des règles, des unités de mesure : en pixel, en pouce, en cm.

8. Dispositif selon une des revendications précédentes comprenant un outil texte permettant d'annoter les images radiographiques et d'y transcrire par symbole des opérations effectuées sur l'image à fin que la communauté médicale et scientifique sache quelles transformations ont subi ces images radiographiques.

9. Dispositif selon une des revendications précédentes ou les format de stockage des données sont fonction des logiciels utilisés pour l'acquisition de l'image ou pour la nécessité de les utiliser sur Internet.

10. Procédé d'optimisation et d'embellissement des films radiologiques notamment pour mettre en évidence des éléments peu ou mal visibles sur les radiographies standard, utilisant un dispositif selon une des revendications 1 à 9, du type de celui comprenant les étapes suivantes :
- placer le film sur le négatoscope,
- photographier ledit film radiologique à l'aide de l'appareil photographique numérique muni d'un objectif macro,
- transférer la prise de vue effectuée ci-dessus vers un ordinateur afin de la visualiser sur un écran et/ou de la stocker,
**caractérisé en ce qu'**il consiste:
- d'une part, à appliquer sur ladite image visualisée sur l'écran de l'ordinateur, un traitement automatisé par la technique des calques et l'utilisation d'un diagramme de répartition des zones claires et sombres avec les mises au point adéquates en ce qui concerne le système colorimétrique, les niveaux, la lumière et le contraste, la pixelisation, les règles et les mesures, la vectorisation, optimisant l'image de façon spécifique en fonction de sa structure et du type de radiographie étudiée afin de mettre en évidence des éléments peu ou mal visibles sur le film original placé sur le négastocope,
- et d'autre part, à stocker la photographie retravaillée.

11. Procédé selon la revendication 10, **caractérisé en ce qu'**il comporte une étape de conversion de la photographie du film radiologique en dessin.

12. Procédé selon la revendication 10 ou 11, **caractérisé en ce qu'**il comporte une étape de conversion du film radiologique en éléments vectoriels.

13. Procédé selon la revendication 10, 11 ou 12, **caractérisé en ce qu'**il comporte une procédure automatique dans les systèmes, RVB, niveau de gris, Bitmap, CMJN, avec mise au point des niveaux, des transferts de dégradé, de la saturation, de la lumière et du contraste avec intervention de filtres spécifiques appliqués aux films radiologiques.

14. Procédé selon l'une des revendications précedentes, **caractérisé en ce qu'**il comporte une sélection de l'image radiologique et un déplacement dans le même calque ou dans un autre calque avec application des processus automatisés déjà décrits et d'une adjonction de retouche et d'une pixelisation adaptée.

15. Procédé selon l'une des revendications précedentes **caractérisé en ce qu'**il comporte une étape où le dessin de la radiographie subit un traitement automatisé selon la technique des calques et où il est modifié selon la technique du transfert de courbe de dégradé et de filtres adaptés.

16. Procédé selon l'une des revendications précedentes **caractérisé en ce qu'**il comporte une étape où le dessin est utilisé à des fins pédagogiques et de recherche statique ou dynamique pouvant être intégrée à des systèmes d'animation.

17. Procédé selon l'une quelconque des revendications 10 à 16, **caractérisé en ce qu'**il comporte une étude des parties molles des clichés squelettiques selon une procédure automatisée qui met en évidence des éléments peu ou mal visibles sur les radiographies standard.

18. Procédé selon l'une quelconque des revendications 10 à 17, **caractérisé en ce qu'**il comporte un affichage des mesures de tout ou partie des structures radiologiques étudiées et permettant des études chiffrées des éléments utiles et permettant une étude comparative dans le temps.

## Claims

1. Device for the optimisation and improvement of X-ray photographic material in order to highlight little or badly visible elements on standard radiographies; including
a negatoscope (1) on which radiographic film is placed (2).
a digital camera (3) fitted with a macro lens ensuring monitor image processing (6), **characterised in that** it comprises an optical enclosure constituting a dark room in which the only visible light comes from the negatoscope.

2. Device according to claim 1, wherein the camera is equipped with a remote control (7).

3. Device according to claims 1 or 2, also including a computer (5) fitted with suitable software either integrated in the optical enclosure or situated outside said optical enclosure.

4. Device according to one of the previous claims, including means for displaying the measurements of part or the whole of the studied radiological structures, and permitting studies of the useful elements in figures as well as a comparative analysis in time.

5. Device according to one of the previous claims wherein the negatoscope is either in a vertical position hung on a wall in the optical enclosure, or in a horizontal position placed on a flat surface of the optical enclosure.

6. Device according to one of the previous claims where to get a 3D simulation effect, gradual oblique and lateral incidences around a 180° axis are used.

7. Device according to one of the previous claims comprising the display of rulers and measuring units: in pixels, in inches, in cm.

8. Device according to one of the previous claims comprising a text tool which permits to annotate X-ray images and to transcribe on them by symbol the operations carried out on the image so that the medical and scientific community is aware of the alterations undergone by said X-ray images.

9. Device according to one of the previous claims wherein the data storage formats depend on the software used for image acquisition or for the need to use them on the internet.

10. Method for the optimisation and improvement of X-ray photographic material in order to highlight little or badly visible elements on standard radiographies using a device according to one of the claims 1 to 9, of the type comprising the following steps:
- place the film on the negatoscope,
- take a photograph of said X-ray photographic material with the aid of the digital camera fitted with a macro lens,
- transfer the above taken exposure to a computer in order to visualise it on the monitor and/or to store it,
**characterised in that** it consists:
on the one hand, in applying to said image visualised on the computer monitor, an automated treatment through tracing techniques and the use of a repartition diagram of clear and dark zones with adequate focusing as regards the colorimetric system, the levels, the light, and the contrast, the rasterization, the rulers and measures, the vectorization, optimising the image in a specific way according to its structure and to the type of X-ray studied in order to highlight little or badly visible elements on the original film placed on the negatoscope,
- and on the other hand in storing the retouched photograph.

11. Method according to claim 10 **characterised in that** it includes a step of converting radiological film into drawing.

12. Method according to claims 10 or 11 **characterised in that** it includes a step of converting radiological film into vectorial elements.

13. Method according to claim 10, 11, or 12 **characterised in that** it includes an automatic procedure in the systems, RVB, grey level, Bitmap, CMJN, with focusing of levels, vignetting transfers, saturation, of the light and of the contrast with specific filters applied to the X-ray photographic material.

14. Method according to one of the previous claims, **characterised in that** it includes a selection of the radiological image and a displacement in the same tracing or in another tracing, with the application of the automated processes already described and of an addition of retouching and of the appropriate rasterization.

15. Method according to one of the previous claims, **characterised in that** it includes a step wherein the drawing of the radiography undergoes an automated treatment according to the tracing technique and wherein it is modified according to the technique of vignetting curve transfer and suited filters.

16. Method according to one of the previous claims, **characterised in that** it includes a step wherein the drawing is used for pedagogical and static or dynamic research ends, which can be integrated in animation systems.

17. Method according to any one of claims 10 to 16, **characterised in that** it includes a study of the soft tissues of skeletal negative pictures according to an automated procedure which highlights little or badly visible elements on standard radiographies.

18. Method according to any one of claims 10 to 17, **characterised in that** it includes a display of the measures of part or all of the studied radiological structures permitting to study the figures of the useful elements as well as a comparative analysis in time.

## Patentansprüche

1. Vorrichtung für die Optimierung und für die Verschönerung der Röntgenfilme, um die Elemente hervorzuheben, die kaum oder schlecht auf den Standard-Radiographien zu erkennen sind; umfassend
ein Röntgenfilmbetrachtungsgerät (1), auf dem der Röntgenfilm (2) platziert ist,
eine Digitalkamera (3), die mit einem Makroobjektiv versehen ist, das eine Bearbeitung der Bilder auf dem Bildschirm (6) erlaubt, **dadurch gekennzeichnet, dass** sie folgendes umfasst: einen geschlossenen optischen Raum, der einen dunklen Raum oder eine Dunkelkammer bildet, in der die einzige Beleuchtung vom Licht des Röntgenfilmbetrachtungsgerätes stammt.

2. Vorrichtung nach Anspruch 1, in der die Kamera mit einer Fernbedienung (7) versehen ist.

3. Vorrichtung nach Anspruch 1 oder 2, die zusätzlich einen Computer (5) umfasst, der mit angepassten Software-Programmen versehen ist, und entweder im optischen Raum integriert ist, oder sich außerhalb des geschlossenen optischen Raums befindet.

4. Vorrichtung nach einem der vorhergehenden Ansprüche, die Mittel zur Anzeige der Maße der ganzen oder partiellen untersuchten Röntgenstrukturen umfasst, die chiffrierte Untersuchungen der nützlichen Elemente erlauben und die eine Vergleichsuntersuchung in der Zeit erlauben.

5. Vorrichtung nach einem der vorhergehenden Ansprüche, in der sich das Röntgenfilmbetrachtungsgerät entweder in senkrechter Position an einer Wand des optischen Raums hängend befindet, oder es sich in horizontaler Position auf einer ebenen Oberfläche im optischen Raum liegend befindet.

6. Vorrichtung nach einem der vorhergehenden Ansprüche, in der das Erhalten eines 3D simulierenden Effektes, laterale und schiefwinkelige Einfälle, nach und nach um eine Achse von 180 Grad verwendet werden.

7. Vorrichtung nach einem der vorhergehenden Ansprüche, die die Anzeige der Lineale, der Maßeinheiten umfasst: in Pixel, in Zoll, in cm.

8. Vorrichtung nach einem der vorhergehenden Ansprüche, die ein Textwerkzeug umfasst, das es erlaubt, die Röntgenbilder mit Anmerkungen zu versehen und auf ihnen anhand eines Symbols Operationen zu übertragen, die auf dem Bild ausgeführt wurden, damit Ärzteschaft und Wissenschaft darüber informiert sind, welche Änderungen an diesen Röntgenbildern vorgenommen wurden.

9. Vorrichtung nach einem der vorhergehenden Ansprüche, in der das Speicherformat der Daten von den Software-Programmen abhängt, die für den Erwerb des Bildes oder für die Notwendigkeit, sie im Internet zu verwenden, verwendet werden.

10. Verfahren für die Optimierung und für die Verschönerung der Röntgenfilme, insbesondere um Elemente hervorzuheben, die kaum oder schlecht auf den Standard-Radiographien zu erkennen sind, das eine Vorrichtung nach einem der Ansprüche 1 bis 9 verwendet, die des Typs ist, der die folgenden Schritte umfasst:
- den Film im Röntgenfilmbetrachtungsgerät platzieren,
- den Röntgenfilm mit Hilfe einer Digitalkamera, die mit einem Makroobjektiv versehen ist, aufnehmen,
- die vorher realisierte Aufnahme zu einem Computer übertragen, um sie auf einem Bildschirm anzuzeigen und/oder um sie zu speichern,
**dadurch gekennzeichnet, dass** es sich aus folgendem zusammensetzt:
- einerseits, das Anwenden an das genannten Bild, das auf dem Bildschirm des Computers angezeigt wird, von einer automatisierten Bearbeitung durch die Technik der Kopien und die Verwendung eines Verteilungsdiagramms der hellen und dunklen Zonen mit angemessenen Scharfeinstellungen hinsichtlich des kalorimetrischen Systems, der Stufen, der Helligkeit und des Kontrasts, der Pixelisierung, der Lineale und der Maße, der Vektorisierung, die das Bild auf spezifische Art und Weise optimiert, und dies in Abhängigkeit von seiner Struktur und vom Typ der untersuchten Radiographie, um Elemente hervorzuheben, die kaum oder schlecht auf dem originellen Film, der im Röntgenfilmbetrachtungsgerät platziert ist, zu erkennen sind,
- und andererseits das Speichern der überarbeiteten Aufnahme.

11. Verfahren nach Anspruch 10, **dadurch gekennzeichnet, dass** es einen Schritt der Umwandlung der Aufnahme des Röntgenfilms in eine Zeichnung umfasst.

12. Verfahren nach Anspruch 10 oder 11, **dadurch gekennzeichnet, dass** es einen Schritt der Umwandlung des Röntgenfilms in vektorielle Elemente umfasst.

13. Verfahren nach Anspruch 10, 11 oder 12, **dadurch gekennzeichnet, dass** es ein automatisches Verfahren umfasst, in den Systemen, RGB, Graustufe, Bitmap, CMJN, mit Scharfeinstellung der Stufen, der Übertragungen von Abstufungen, der Übersättigung, der Helligkeit und des Kontrasts mit Eingriff von spezifischen an die Röntgenfilme angewandten Filtern.

14. Verfahren nach einem der vorhergehenden Ansprüche, **dadurch gekennzeichnet, dass** es eine Auswahl des Röntgenbildes umfasst und eine Verschiebung in derselben Kopie oder in einer anderen Kopie mit Anwendung der automatisierten bereits beschriebenen Prozesse und des Hinzufügens einer Retuschierung und einer angepassten Pixelisierung.

15. Verfahren nach einem der vorhergehenden Ansprüche, **dadurch gekennzeichnet, dass** es einen Schritt umfasst, in dem die Zeichnung der Radiographie einer automatisierten Bearbeitung nach der Technik der Kopien unterzogen wird und in der es nach der Technik des Transfers der Abstufungskurve und der angepassten Filter geändert wird.

16. Verfahren nach einem der vorhergehenden Ansprüche, **dadurch gekennzeichnet**, das es einen Schritt umfasst, in dem die Zeichnung zu pädagogischen Zwecken und zu Zwecken der statischen oder dynamischen Forschung verwendet wird, der in Animationssystemen integriert werden kann.

17. Verfahren nach einem der Patentansprüche 10 bis 16, **dadurch gekennzeichnet, dass** es eine Untersuchung der Weichteile der Skelettaufnahmen umfasst, und dies nach einem automatisierten Verfahren, das Elemente hervorhebt, die kaum oder schlecht auf den Standard-Radiographien zu erkennen sind.

18. Verfahren nach einem der Patentansprüche 10 bis 17, **dadurch gekennzeichnet, dass** es eine Anzeige der Maße der ganzen oder partiellen untersuchten Röntgenstrukturen umfasst, die chiffrierte Untersuchungen der nützlichen Elemente erlauben und die eine Vergleichsuntersuchung in der Zeit erlauben.
